(19) Europäisches Patentamt
European Patent Office
Office européen des brevets

(11) **EP 3 417 447 B1**

(12) **FASCICULE DE BREVET EUROPEEN**

(45) Date de publication et mention de la délivrance du brevet:
**29.09.2021 Bulletin 2021/39**

(21) Numéro de dépôt: **17704278.5**

(22) Date de dépôt: **15.02.2017**

(51) Int Cl.:
**G09B 19/00** $^{(2006.01)}$

(86) Numéro de dépôt international:
**PCT/EP2017/053345**

(87) Numéro de publication internationale:
**WO 2017/140701 (24.08.2017 Gazette 2017/34)**

(54) **EMETTEUR, RECEPTEUR ET SYSTEME DE SIMULATION D'UN NIVEAU D'EXPOSITION A UN RAYONNEMENT IONISANT**

SENDER, EMPFÄNGER UND SYSTEM ZUR SIMULATION EINES EXPOSITIONSGRADES GEGENÜBER IONISIERENDER STRAHLUNG

EMITTER, RECEIVER AND SYSTEM FOR SIMULATING A LEVEL OF EXPOSURE TO IONISING RADIATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2016 FR 1651312**

(43) Date de publication de la demande:
**26.12.2018 Bulletin 2018/52**

(73) Titulaire: **Ob'do Contact Agile**
**14460 Colombelles (FR)**

(72) Inventeurs:
• **MARIE, Julien**
**14460 Colombelles (FR)**
• **WERCK, Alain**
**14460 Colombelles (FR)**

(74) Mandataire: **Cabinet Le Guen Maillet**
**3, impasse de la Vigie**
**CS 71840**
**35418 Saint-Malo Cedex (FR)**

(56) Documents cités:
**US-A- 4 917 611**

**Description**

La présente invention concerne le domaine technique des dosimètres utilisés en environnements de travail rendus dangereux par la présence de rayonnements ionisants, et plus particulièrement celui d'un système permettant de simuler des sources de rayonnement ionisant et des dispositifs de mesure du rayonnement de ces sources.

Des mesures particulières de protection sont nécessaires pour les travailleurs évoluant dans des environnements en présence de substances émettant un rayonnement ionisant dangereux pour la santé, typiquement des substances radioactives. La formation de ces travailleurs, qui doivent gérer des taches complexes dans ces environnements dangereux, est un aspect essentiel des mesures de protection. Il est pour cela essentiel de pouvoir mettre en place des simulations de ces environnements de travail afin que les travailleurs puissent se former dans des conditions les plus proches de la réalité. En particulier, ces travailleurs étant équipés de radiamètres ou de dosimètres, dispositifs permettant de mesurer un niveau d'exposition à un rayonnement ionisant, il est nécessaire de disposer de systèmes permettant de simuler le fonctionnement de radiamètres ou de dosimètres en présence de sources fictives de rayonnement ionisant.

De tels systèmes existent aujourd'hui. Certains reposent sur un principe de localisation des utilisateurs au sein d'un environnement de travail simulé afin d'estimer leur exposition à une ou plusieurs sources ionisantes. D'autres systèmes reposent sur la simulation d'une source ionisante par un émetteur d'ondes électromagnétiques, un dosimètre étant alors simulé par un récepteur adéquat. Ces systèmes sont peu précis, en particulier pour des problèmes de directivité de l'antenne de l'émetteur, qui ne peut pas simuler correctement un rayonnement ionisant omnidirectionnel homogène. Plus globalement, ces systèmes sont généralement soit peu chers et peu précis, soit plus précis mais chers.

Par exemple, le document US 4,917,611 divulgue un système permettant de simuler une source d'émission d'un rayonnement ionisant. Dans ce système, l'intensité du rayonnement est simulée par une modulation d'un signal radioélectrique, la modulation étant contrôlée par un opérateur.

Il est souhaitable de pallier ces inconvénients de l'état de la technique.

L'invention concerne un émetteur d'ondes électromagnétiques permettant de simuler une source d'émission d'un rayonnement ionisant. L'émetteur d'ondes électromagnétiques est adapté pour : émettre au moins un signal prédéfini avec une puissance d'émission, émettre un premier message comprenant une valeur d'un premier paramètre correspondant à la puissance d'émission du signal prédéfini émis et émettre un deuxième message comprenant une valeur d'un deuxième paramètre correspondant à une puissance simulée d'émission de la source du rayonnement ionisant.

Avantageusement, l'émetteur d'ondes électromagnétiques émet périodiquement un signal prédéfini simulant un rayonnement ionisant. L'émetteur d'ondes électromagnétiques émet aussi des messages comprenant des informations sur la puissance d'émission dudit signal prédéfini, par exemple exprimé en Watt ou en dBm, et une information sur la puissance du rayonnement ionisant qui est simulé par l'émission dudit signal prédéfini, par exemple exprimée en unité d'exposition à un mètre de la source fictive, c'est-à-dire de l'émetteur. Ces informations, une fois reçues par un récepteur adéquat, permettent deux choses : premièrement déterminer une distance entre l'émetteur et le récepteur, grâce à l'information sur la puissance émise du signal prédéfini, et, deuxièmement, déterminer un niveau simulé d'exposition à la source ionisante simulée par l'émetteur, et ce grâce à l'information sur la puissance simulée d'émission du rayonnement ionisant de l'émetteur.

Selon un mode de réalisation complémentaire de l'invention, l'émetteur d'ondes électromagnétiques comprenant un dispositif de saisie, l'émetteur d'ondes électromagnétiques est adapté pour déterminer la valeur du deuxième paramètre caractérisant la puissance simulée d'émission du rayonnement ionisant.

Avantageusement, l'émetteur comprend un dispositif, tel un interrupteur ou un bouton de réglage, permettant de régler un paramètre caractérisant la puissance simulée du rayonnement simulé. Dit autrement, un utilisateur de l'émetteur peut régler ce paramètre afin de modifier l'information comprise dans le deuxième message, l'information déterminant la puissance simulée du rayonnement ionisant. Un même émetteur peut ainsi servir pour simuler différentes dangerosités de sources ionisantes suivant son réglage.

Selon un mode de réalisation complémentaire de l'invention, l'émetteur d'ondes électromagnétiques est adapté pour recevoir un troisième message comprenant une indication afin de déterminer la valeur du deuxième paramètre caractérisant la puissance simulée d'émission du rayonnement ionisant.

Avantageusement, l'émetteur détermine le paramètre caractérisant la puissance simulée de la source ionisante grâce à une indication reçue dans un troisième message. Ainsi, l'émetteur peut être réglé à distance, par exemple par un dispositif de contrôle.

Selon un mode de réalisation complémentaire de l'invention, l'émetteur d'ondes électromagnétiques comprend un nombre pair d'antennes disposées par paires, les paires d'antennes étant séparées d'une distance égale à une demi-longueur d'onde d'une porteuse utilisée pour l'émission du signal prédéfini.

Avantageusement, le nombre d'antennes, ainsi que leurs dispositions les unes par rapport aux autres, permet d'obtenir un diagramme d'émission de l'émetteur le plus homogène possible afin de simuler au mieux une source ionisante.

Selon un mode de réalisation complémentaire de l'invention, l'émetteur d'ondes électromagnétiques est adapté pour émettre le signal prédéfini sur une pluralité de canaux de transmission.

Avantageusement, le signal prédéfini est émis sur une pluralité de canaux de transmission afin d'obtenir une diversité de transmission.

Selon un mode de réalisation complémentaire de l'invention, le premier message et le deuxième message sont un même message.

Selon un mode de réalisation complémentaire de l'invention, le signal prédéfini est émis périodiquement.

L'invention concerne également un récepteur d'ondes électromagnétiques permettant de recevoir un signal correspondant à une simulation d'émission d'un rayonnement ionisant. Le récepteur d'ondes électromagnétiques est adapté pour : recevoir un signal prédéfini émis par un émetteur d'ondes électromagnétiques permettant de simuler une source d'émission d'un rayonnement ionisant, déterminer une puissance de réception dudit signal prédéfini, recevoir un premier message comprenant une valeur d'un premier paramètre correspondant à la puissance d'émission du signal prédéfini émis, recevoir un deuxième message comprenant une valeur d'un deuxième paramètre correspondant à une puissance simulée d'émission de la source du rayonnement ionisant et déterminer un niveau d'exposition simulé au rayonnement ionisant en fonction de la puissance de réception du signal prédéfini, de la valeur du premier paramètre et de la valeur du deuxième paramètre.

Avantageusement, le récepteur d'ondes électromagnétiques permet de recevoir le signal prédéfini ainsi que les premier et deuxième messages. Le récepteur calcule le niveau de puissance du signal reçu, et peut déduire une distance entre le récepteur et l'émetteur en utilisant l'information reçue sur le niveau de puissance d'émission du signal prédéfini par l'émetteur. A partir de cette distance, et de l'information sur la puissance simulée d'émission du rayonnement ionisant, le récepteur peut en déduire une puissance simulée de rayonnement ionisant reçu.

Selon un mode de réalisation de l'invention, l'émetteur d'ondes électromagnétiques comprenant une pluralité d'antennes d'émission, chaque antenne émettant un signal prédéfini, le récepteur d'ondes électromagnétiques est adapté pour, afin de déterminer une puissance de réception permettant de déterminer une distance entre le récepteur et l'émetteur : déterminer au moins une puissance de réception du signal prédéfini pour chaque antenne, déterminer itérativement une puissance, dite puissance de référence, pour chaque antenne, une nouvelle valeur de la puissance de référence étant déterminée en utilisant la puissance de réception et la puissance de référence précédemment déterminées, déterminer une puissance de réception pour l'émetteur en utilisant les valeurs des puissances de références de la pluralité d'antennes.

Selon un mode de réalisation de l'invention, le récepteur d'ondes électromagnétiques est adapté en outre pour émettre au moins un message comprenant le niveau d'exposition simulé au rayonnement ionisant à destination d'un dispositif électronique de contrôle.

L'invention concerne également un système comprenant au moins un émetteur d'ondes électromagnétiques permettant de simuler une émission d'un rayonnement ionisant et au moins un récepteur d'ondes électromagnétiques. Chaque émetteur d'ondes électromagnétiques est adapté pour : émettre périodiquement un signal prédéfini, émettre un message comprenant une information sur la puissance d'émission du signal prédéfini émis et émettre un message comprenant une information sur une puissance simulée d'émission du rayonnement ionisant. Chaque récepteur d'ondes électromagnétiques est adapté pour : recevoir le signal prédéfini émis par l'émetteur d'ondes électromagnétiques permettant de simuler une source d'émission du rayonnement ionisant, déterminer une puissance de réception dudit signal prédéfini, recevoir le message comprenant une information sur la puissance d'émission du signal prédéfini reçu, recevoir le message comprenant une information sur la puissance simulée d'émission du rayonnement ionisant et déterminer un niveau d'exposition simulé au rayonnement ionisant de la source simulée d'émission du rayonnement ionisant.

Selon un mode de réalisation de l'invention, le système comprend en outre un dispositif électronique de contrôle, le récepteur d'ondes électromagnétiques étant adapté pour émettre au moins un message à destination du dispositif électronique de contrôle, ledit message comprenant une information sur le niveau d'exposition simulé au rayonnement ionisant déterminé par le récepteur d'ondes électromagnétiques.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter tout ou partie des étapes mentionnées ci-dessous, lorsque ledit programme est exécuté par le processeur. L'invention concerne également un medium de stockage d'informations comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un système comprenant un émetteur d'ondes électromagnétiques permettant de simuler une source d'un rayonnement ionisant, des récepteurs d'ondes électromagnétiques permettant de simuler une mesure du rayonnement ionisant de ladite source simulée et un dispositif électronique de contrôle dudit système de simulation selon un mode de réalisation de la présente invention ;

- la Fig. 2 illustre schématiquement un exemple d'architecture matérielle d'un émetteur permettant de simuler une source d'un rayonnement ionisant pouvant être utilisé dans le système tel qu'illustré dans la Fig. 1 ;
- la Fig. 3 illustre schématiquement un exemple d'architecture matérielle d'un récepteur permettant de simuler la mesure d'un rayonnement ionisant pouvant être utilisé dans le système tel qu'illustré dans la Fig. 1 ;
- la Fig.4 illustre schématiquement un procédé de fonctionnement d'un émetteur permettant de simuler une source d'un rayonnement ionisant pouvant être utilisé dans le système tel qu'illustré dans la Fig. 1 ;
- la Fig. 5 illustre schématiquement un premier procédé de fonctionnement d'un récepteur permettant de simuler la mesure d'un rayonnement ionisant pouvant être utilisé dans le système tel qu'illustré dans la Fig. 1, et ;
- la Fig.6 illustre schématiquement un deuxième procédé alternatif de fonctionnement d'un récepteur permettant de simuler la mesure d'un rayonnement ionisant pouvant être utilisé dans le système tel qu'illustré dans la Fig. 1.

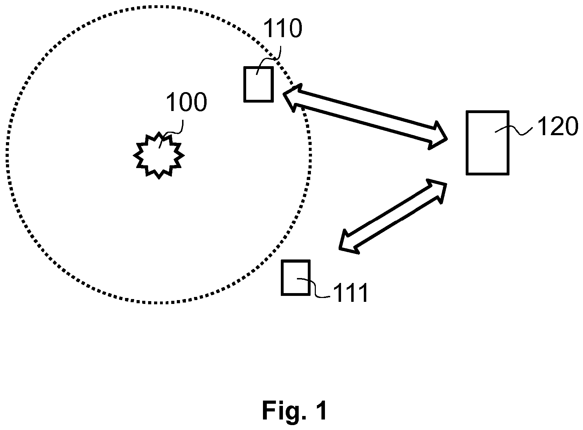

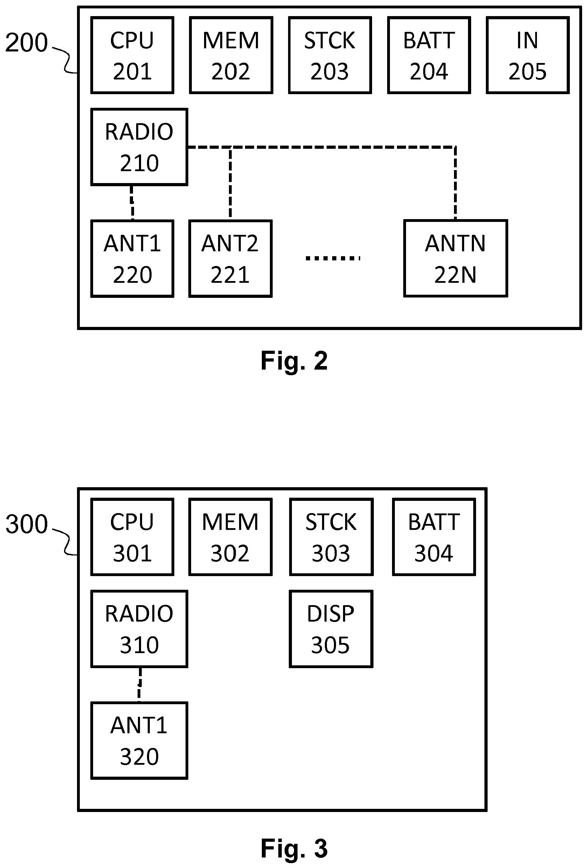

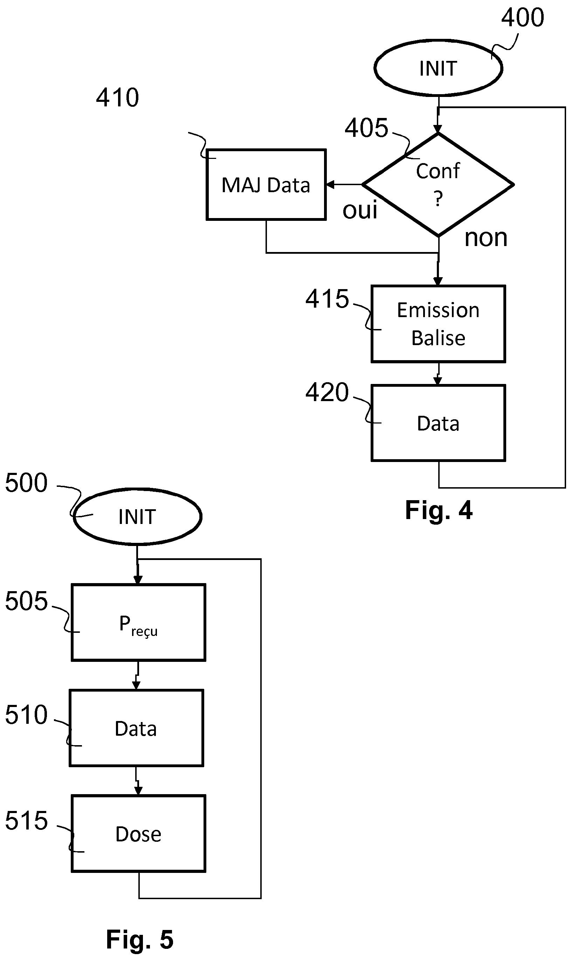

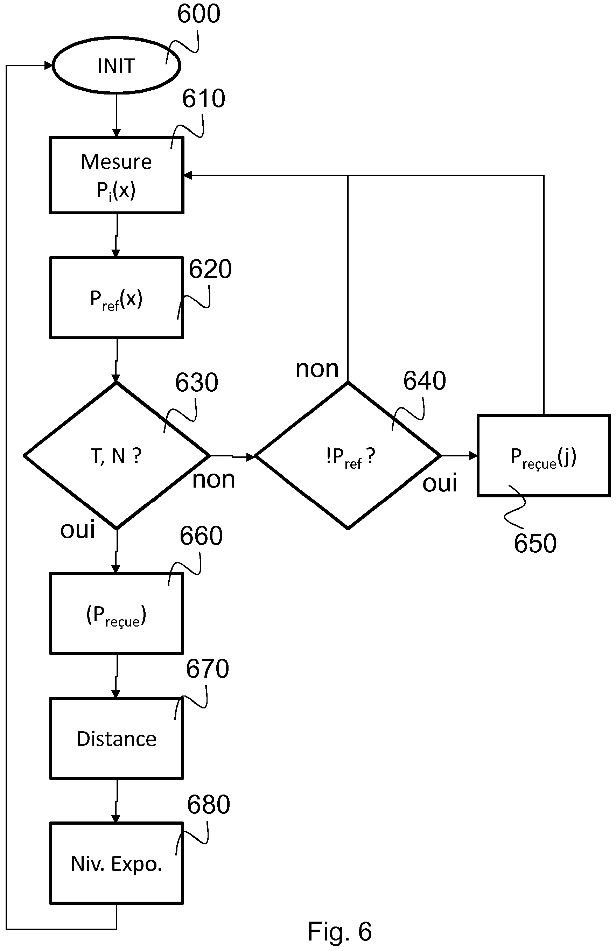

La **Fig. 1** illustre schématiquement un système comprenant un émetteur d'ondes électromagnétiques (ou «émetteur») 100, permettant de simuler une source de rayonnement ionisant, des récepteurs d'ondes électromagnétiques (ou « récepteurs ») 110 et 111, permettant de simuler une mesure du rayonnement ionisant de ladite source simulée et un dispositif électronique de contrôle 120 dudit système de simulation selon un mode de réalisation de la présente invention. L'émetteur 100 simule une source de rayonnement ionisant, et peut être localisé n'importe où dans un environnement de travail de formation. Les récepteurs 110 et 111 simulent le fonctionnement d'un récepteur de rayonnement ionisant ou détecteur de radioactivité, c'est-à-dire d'un radiamètre ou d'un dosimètre permettant de mesurer une exposition à un rayonnement ionisant. Les récepteurs 110 et 111 peuvent prendre la forme d'un dispositif électronique dédié, tel que décrit par exemple en Fig. 3. Les récepteurs 110 et 111 peuvent aussi être un dispositif électronique connu, par exemple une tablette ou un « smartphone » (téléphone mobile dit « intelligent »), exécutant un programme d'ordinateur implémentant un procédé tel que décrit ci-dessous, par exemple dans la Fig. 5 ou la Fig. 6. Dans ce cas, le smartphone doit comprendre un récepteur d'ondes électromagnétiques, par exemple un module « *Bluetooth* » ou « *WiFi* » *(Wireless Fidelity* en anglais), adapté pour recevoir au moins une émission de l'émetteur 100. L'utilisation d'une technologie « *WiFi* » permet ainsi d'utiliser un même module radio au sein du récepteur 110 ou 120 pour à la fois recevoir des signaux de l'émetteur 100 et communiquer avec un dispositif électronique de contrôle 120 de type smartphone, ordinateur portable ou tablette numérique, lesquels comprennent quasiment toujours un module radio « *WiFi* ». Le récepteur 110 ou 120 peut déterminer une puissance simulée reçue instantanée ou bien intégrer sur une période donnée la puissance simulée reçue afin de déterminer une dose simulée de rayonnement ionisant reçue. Dans le premier cas, le récepteur 110 ou 120 simule un équipement de type « compteur Geiger », dans le deuxième cas, un équipement de type « dosimètre ». Un récepteur 110 ou 120 peut simuler aisément les deux types d'équipements. Le système permet de simuler le fonctionnement d'un détecteur de radioactivité, simulé par le récepteur 110 ou 111, en présence d'une source de rayonnement ionisant, simulée par l'émetteur 100. Le système peut comprendre plusieurs émetteurs similaires à l'émetteur 100, chaque émetteur simulant une source de rayonnement ionisant différente. Selon le mode de réalisation de l'invention, le dispositif électronique de contrôle 120 permet de suivre, en temps réel ou en temps différé, la puissance simulée de rayonnement ionisant reçue par chaque récepteur. Selon un mode de réalisation complémentaire de l'invention, le dispositif électronique de contrôle 120 permet de contrôler à distance la puissance simulée de rayonnement ionisant émis par un l'émetteur 100.

La **Fig.2** illustre schématiquement un exemple d'architecture matérielle d'un émetteur 200 permettant de simuler une source de rayonnement ionisant. L'émetteur 200 est identique à l'émetteur 100 pouvant être utilisé dans le système tel qu'illustré dans la Fig. 1. L'émetteur 200 comporte, reliés par un bus de communication (non représenté) : un processeur ou CPU (« *Central Processing Unit* » en anglais) 201 ; une mémoire MEM 202 de type RAM (« *Random Access Memory* » en anglais) ou ROM *(« Read Only Memory* » en anglais) ; une unité de stockage STCK 203 de type stockage interne ; une batterie BATT 204; une interface de communication, ou module radio, RADIO 210, comprenant un nombre « N » d'antennes 220, 221, ..., 22N. L'émetteur peut comporter en outre un dispositif de saisie IN 205, tel un interrupteur, un curseur ou un bouton de réglage. L'unité de stockage STCK 203 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 201 peut enregistrer des données sur l'unité de stockage STCK 203 ou lire des données enregistrées sur l'unité de stockage STCK 203. Ces données peuvent correspondre à des paramètres de configuration ou à une information reçue par exemple dans un message. La batterie BATT 204 permet d'alimenter électriquement l'émetteur 200, la batterie BATT 204 étant possiblement de type rechargeable, par exemple via une interface de type micro-USB (« *Universal Serial Bus* » en anglais, non représentée). Selon un mode de réalisation complémentaire de l'invention, l'émetteur 200 peut aussi être alimenté via une source électrique externe. L'interface de communication ou module radio RADIO 210 peut être une interface de communication sans fil à faible consommation énergétique (par exemple une technologie de type : « *Bluetooth* », « *BLE - Bluetooth Low Energy* » ou « *Zigbee* » - en anglais). Afin de pouvoir émettre une onde électromagnétique, l'interface de communication comprend N antennes. Selon un mode de réalisation de l'invention, l'interface de communication RADIO 210 comprend un nombre « N » d'antennes 220, 221, ..., 22N, « N » étant pair et supérieur à quatre (4).

Les antennes 220, 221, ..., 22N sont disposées en « N/2 » paires d'antennes, les paires d'antennes étant séparées l'une de l'autre d'une distance égale à une demi-longueur d'onde d'une porteuse utilisée pour l'émission du signal prédéfini émis par l'émetteur 200. Un choix d'une valeur de N égale à « 4 » est un bon compromis entre une bonne uniformité ou homogénéité de l'émission des ondes électromagnétiques et en même temps un volume contenu des antennes à intégrer dans l'émetteur 200. Ajouter des paires d'antennes permet d'améliorer l'homogénéité de l'émission des ondes électromagnétiques, au détriment d'un encombrement plus grand et d'un coût supérieur. Dans le cas d'une interface de communication RADIO 210 de type *« Bluetooth »*, émettant typiquement sur une bande de fréquence de l'ordre de deux virgule quatre gigahertz (2.4 Ghz), les paires d'antennes sont ainsi séparées l'une de l'autre d'une longueur correspondant à une demi-longueur d'onde, soit environ six virgule vingt-cinq centimètres (6.25 cm). Selon un mode de réalisation complémentaire de l'invention, les antennes d'une même paire d'antennes sont disposées perpendiculairement l'une par rapport à l'autre afin d'homogénéiser l'émission des ondes électromagnétiques. Selon un mode de réalisation alternatif de l'invention, l'émetteur 200 comprend une pluralité d'interfaces de communication RADIO, chaque interface de communication RADIO comprenant une antenne. Le positionnement des antennes de chaque interface de communication RADIO l'une par rapport à l'autre reste identique à ce qui a été précédemment décrit. Dit autrement, les interfaces de communications sont placées de façon à ce que les antennes soient disposées de la même manière que précédemment décrit. Le processeur 201 est capable d'exécuter des instructions chargées dans la mémoire MEM 202, par exemple à partir de l'unité de stockage STCK 203 ou d'un réseau de communication via l'interface de communication RADIO 210. Lorsque le dispositif électronique d'enregistrement 200 est mis sous tension, le processeur 201 est capable de lire de la mémoire MEM 202 des instructions et de les exécuter. Ces instructions forment un programme d'ordinateur causant la mise en œuvre, par le processeur 201, de tout ou partie des algorithmes et étapes décrits ici en relation avec l'émetteur d'ondes électromagnétiques 100, 200 en question. Ainsi, tout ou partie des algorithmes et étapes décrits ici peut être implémenté sous forme logicielle par exécution d'un ensemble d'instructions par une machine programmable, telle qu'un DSP (*« Digital Signal Processor »* en anglais) ou un microcontrôleur. Tout ou partie des algorithmes et étapes décrits ici peut aussi être implémenté sous forme matérielle par une machine ou un composant dédié, tel qu'un FPGA (*« Field-Programmable Gate Array »* en anglais) ou un ASIC (*« Application-Specifie Integrated Circuit »* en anglais).

La **Fig.3** illustre schématiquement un exemple d'architecture matérielle d'un récepteur 300 permettant de simuler la mesure d'un rayonnement ionisant. Le récepteur 300 est identique au récepteur 110 ou 111 pouvant être utilisé dans le système tel qu'illustré dans la Fig. 1. Le récepteur 300 comporte, reliés par un bus de communication (non représenté) : un processeur ou CPU (*« Central Processing Unit »* en anglais) 301 ; une mémoire MEM 302 de type RAM (*« Random Access Memory »* en anglais) ou ROM (*« Read Only Memory »* en anglais) ; une unité de stockage STCK 303 de type stockage interne ; une batterie BATT 304; un dispositif de présentation d'information DISP 305 et une interface de communication RADIO 310, comprenant une antenne ANT1 320. L'unité de stockage STCK 303 peut être de type disque dur HDD (*« Hard Disk Drive »* en anglais) ou SSD (*« Solid-State Drive »* en anglais), ou de type lecteur de support de stockage externe, tel un lecteur de cartes SD *(« Secure Digital »* en anglais). Le processeur CPU 301 peut enregistrer des données sur l'unité de stockage STCK 303 ou lire des données enregistrées sur l'unité de stockage STCK 303. Ces données peuvent correspondre à des paramètres de configuration ou à une information reçue par exemple dans un message ou déterminée par le processeur CPU 301. La batterie BATT 304 permet d'alimenter électriquement le récepteur 300, la batterie BATT 304 étant possiblement de type rechargeable, par exemple via une interface de type micro-USB (*« Universal Serial Bus »* en anglais, non représentée). Le dispositif de présentation d'information DISP 305 est typiquement un écran permettant d'afficher des données. Le dispositif de présentation d'information DISP 305 peut aussi comprendre une jauge ou un affichage de type VU mètre *(volume unit - VU - meter* en anglais). Le dispositif de présentation d'information DISP 305 peut comprendre un haut-parleur permettant l'émission d'un signal sonore déterminé par exemple à partir d'une valeur déterminée par le processeur CPU 301 de niveau d'exposition simulé au rayonnement ionisant (par exemple, l'émission de déclics sonores dont la fréquence est proportionnelle au niveau simulé d'exposition). L'interface de communication, ou module radio, RADIO 310 peut être une interface de communication sans fil à faible consommation énergétique (par exemple une technologie de type : *« Bluetooth », « BLE - Bluetooth Low Energy »* ou *« Zigbee »* - en anglais). La technologie utilisée dans l'interface de communications RADIO 210 de l'émetteur 200 et l'interface de communication RADIO 310 du récepteur 300 est possiblement la même, ou permet *a minima* une compatibilité afin que le récepteur 300 puisse recevoir des messages émis par l'émetteur 200. Le processeur CPU 301 est capable d'exécuter des instructions chargées dans la mémoire MEM 302, par exemple à partir de l'unité de stockage STCK 303 ou d'un réseau de communication via l'interface de communication RADIO 310. Lorsque le récepteur 300 est mis sous tension, le processeur 301 est capable de lire de la mémoire MEM 302 des instructions et de les exécuter. Ces instructions forment un programme d'ordinateur causant la mise en œuvre, par le processeur 301, de tout ou partie des algorithmes et étapes décrits ici en relation avec le récepteur 300 en question. Ainsi, tout ou partie des procédés, algorithmes et étapes décrits ici peut être implémenté sous forme logicielle par exécution d'un ensemble d'instructions par une machine programmable, tel qu'un DSP (*« Digital Signal Processor »* en anglais) ou un microcontrôleur. Tout ou partie des algorithmes et étapes décrits ici peut aussi être implémenté sous forme matérielle par une machine ou un composant dédié, tel qu'un FPGA (« *Field-Programmable Gate Array* » en anglais) ou un ASIC (« *Application-Specific Integrated Circuit* » en anglais).

La Fig. 4 illustre schématiquement un procédé de fonctionnement d'un émetteur 200 permettant de simuler une source de rayonnement ionisant pouvant être utilisé dans le système tel qu'illustré dans la Fig. 1 en tant qu'émetteur 100.

Une première étape 400 correspond à la mise sous tension de l'émetteur 200. Lors de cette étape 400, l'émetteur 200 charge en mémoire MEM 202 une configuration enregistrée dans l'unité de stockage STCK 203. La configuration comprend un paramètre caractérisant une puissance d'émission d'un rayonnement ionisant que l'émetteur 200 est destiné à simuler. Selon un mode de réalisation complémentaire de l'invention, la valeur du paramètre est dépendante de la position du dispositif de saisie IN 205. Il s'agit par exemple de la position d'un interrupteur, d'un curseur ou d'un bouton de réglage présent sur l'émetteur 200. Ainsi, l'émetteur 200 peut comporter un interrupteur à plusieurs positions permettant à un utilisateur de choisir aisément la puissance d'émission de la source ionisante à simuler, chaque position de l'interrupteur correspondant à une source de rayonnement ionisant de puissance différente à simuler. La valeur du paramètre correspondant à la puissance simulée d'émission de la source ionisante est ainsi dépendante de la position de l'interrupteur.

Dans une étape 405, selon un mode de réalisation optionnel de l'invention, l'émetteur 200 reçoit un message comprenant une indication afin de déterminer la valeur du paramètre caractérisant la puissance simulée d'émission du rayonnement ionisant. Dans le cas où la valeur reçue est différente de la valeur actuelle du paramètre, c'est-à-dire de la valeur du paramètre enregistré en mémoire, l'émetteur 200, dans une étape 410, met à jour la valeur du paramètre avec la valeur reçue. L'émetteur 200 peut enregistrer cette nouvelle valeur dans la mémoire MEM 202. L'émetteur peut aussi enregistrer cette nouvelle valeur dans l'unité de stockage STCK 203 afin qu'elle soit mémorisée si l'émetteur devait être éteint.

Dans le cas où l'émetteur 200 comporte un dispositif de saisie IN 205 permettant de régler la valeur du paramètre caractérisant la puissance simulée d'émission du rayonnement ionisant, le dispositif de saisie IN 205 peut comporter une position indiquant que la valeur du paramètre est réglée par la réception d'un message, en provenance par exemple d'un dispositif électronique de contrôle 120.

Dans une étape 415, l'émetteur 200 émet au moins un signal prédéfini avec une puissance d'émission déterminée. La puissance d'émission du signal prédéfini peut être déterminée selon un paramètre enregistré dans l'unité de stockage STCK 203 ou alors être déterminée par l'émetteur 200 lors de l'émission du signal prédéfini. L'émetteur 200 peut comprendre un module de contrôle de la puissance d'émission du signal prédéfini afin de s'assurer que la puissance d'émission est constante et égale à une valeur prédéterminée. L'émetteur 200 peut comprendre un module de contrôle de la puissance d'émission du signal prédéfini afin de s'assurer que la puissance d'émission du signal prédéfini est déterminée et connue lors de l'émission de chaque signal prédéfini. Selon un mode de réalisation, la puissance d'émission du signal prédéfini est mesurée initialement lors d'une étape de calibration. Ainsi, lors de cette étape de calibration, après une mesure de la puissance d'émission du signal prédéfini par l'émetteur 200, la valeur de la puissance d'émission mesurée est enregistrée dans l'unité de stockage STCK 203. Ce paramètre, représentant la valeur de la puissance d'émission mesurée lors de l'étape de calibration, peut être exprimé comme une puissance d'émission mesurée à une distance donnée, par exemple à un mètre (1 m). Cette puissance peut être exprimée en Watt (W) ou par exemple en rapport de puissance en décibels (dB) entre la puissance mesurée et un milliwatt (mW) (dBm, sans unité).

Dans l'hypothèse où les antennes ANT1 220, ANT2 221 ... ANTN 22N sont regroupées par paires, l'émetteur 200 émet le signal prédéfini via ces différentes paires d'antennes. L'émetteur peut émettre le signal prédéfini de façon séquentielle ou successive sur les différentes paires d'antennes. L'émetteur 200 peut émettre un signal prédéfini différent via chaque paire d'antennes. En particulier, l'émetteur 200 peut utiliser pour chaque paire d'antennes un canal d'émission différent. L'émetteur 200 peut aussi émettre de façon simultanée sur chaque paire d'antennes, l'émetteur 200 utilisant un canal différent d'émission pour chaque paire d'antennes.

Ainsi, pour un émetteur 200 comportant une interface de communication RADIO 210 de type « *Bluetooth* », la bande de fréquence (2.402 - 2.480 GHz) est scindée en 79 canaux d'une largeur de 1 MHz. L'émetteur 200 peut utiliser un canal d'émission différent pour chaque antenne. L'émetteur 200 peut effectuer une rotation des canaux utilisés pour chaque antenne. L'émetteur 200 peut restreindre l'utilisation à seulement quelques canaux, par exemple autant de canaux que d'antennes. L'émetteur 200 peut émettre un signal prédéfini associé de manière unique à l'émetteur 200. Le signal prédéfini peut correspondre à un encodage d'une référence unique propre à l'émetteur 200, par exemple une adresse physique associée à l'interface de communication RADIO 210. Selon un mode de réalisation de l'invention, chaque antenne possède une adresse physique, telle une adresse dite MAC *(« Media Access Control »* en anglais) unique. Selon un mode de réalisation alternatif, le signal prédéfini peut être généré aléatoirement, par exemple lors de la mise sous tension de l'émetteur 200 dans l'étape 400.

Dans une étape 420, l'émetteur 200 émet un message comprenant une valeur d'un paramètre correspondant à la puissance d'émission du signal prédéfini émis par l'émetteur et la valeur du paramètre correspondant à la puissance simulée d'émission de la source du rayonnement ionisant. Selon un mode de réalisation alternatif de l'invention, l'émetteur 200 envoie deux messages, le premier message comprenant la valeur du paramètre correspondant à la puissance d'émission du signal prédéfini, le deuxième message comprenant la valeur du paramètre correspondant à la puissance simulée d'émission de la source du rayonnement ionisant. La valeur du paramètre correspondant à la puissance d'émission du signal prédéfini est la valeur déterminée lors de l'émission du signal prédéfini dans l'étape 415. La valeur du paramètre correspondant à la puissance simulée d'émission de la source du rayonnement ionisant est celle définie aux étapes 405 et 410 si ces étapes sont mises en œuvre.

L'émetteur 200 effectue les étapes 415 et 420 de façon cyclique, émettant périodiquement le signal prédéfini.

Selon un mode de réalisation de l'invention, l'émetteur 200 réalise les étapes 415 et 420 successivement à chaque cycle. Suivant un mode de réalisation alternatif, l'étape 420 est effectuée avec une périodicité différente de l'étape 415. Ainsi, l'étape 415 d'émission d'un signal prédéfini peut être réalisée avec une périodicité plus réduite que l'étape 420. Par exemple, l'émetteur 200 peut réaliser l'étape 415 correspondant à l'émission du signal prédéfini à une plus grande fréquence, c'est-à-dire plus souvent, que l'étape 420.

La **Fig. 5** illustre schématiquement un premier procédé de fonctionnement d'un récepteur 300 permettant de simuler la mesure d'un rayonnement ionisant pouvant être utilisé dans le système tel qu'illustré dans la Fig. 1 en tant que récepteur 110 ou 111. L'étape 500 correspond à la mise sous tension du récepteur 300. Dans une étape 505, le récepteur 300 reçoit un signal prédéfini. Le récepteur 300 détermine une puissance reçue de ce signal prédéfini (« *Received Signal Strength Indication* », RSSI, en anglais).

Dans une étape 510, le récepteur 300 reçoit un ou plusieurs messages. Selon un mode de réalisation de l'invention, le récepteur 300 reçoit un premier message comprenant une valeur d'un premier paramètre correspondant à la puissance d'émission du signal prédéfini émis et reçoit un deuxième message comprenant une valeur d'un deuxième paramètre correspondant à une puissance simulée d'émission de la source du rayonnement ionisant. Selon un autre mode de réalisation de l'invention, le récepteur 300 reçoit un message comprenant une valeur d'un premier paramètre correspondant à la puissance d'émission du signal prédéfini émis et une valeur d'un deuxième paramètre correspondant à une puissance simulée d'émission de la source du rayonnement ionisant.

Dans une étape 515, le récepteur 300 détermine un niveau d'exposition simulé au rayonnement ionisant en fonction de la puissance de réception du signal prédéfini, de la valeur du premier paramètre et de la valeur du deuxième paramètre.

Selon un mode de réalisation de l'invention :

$P_{reçue}$ = puissance reçue du signal prédéfini, déterminée lors de l'étape 505,

$P_0$ = puissance d'émission du signal prédéfini émis par l'émetteur 200 lors de l'étape 415, correspondant à la valeur du premier paramètre reçue dans un message lors de l'étape 510,

Rsimulée = puissance simulée d'émission de la source du rayonnement ionisant, correspondant à la valeur du deuxième paramètre reçue dans un message lors de l'étape 510.

Le récepteur 300 détermine dans un premier temps la distance « D » qui le sépare de l'émetteur 200 simulant la source de rayonnement ionisant et émetteur du signal prédéfini reçu. La valeur de la distance « D » est déterminée à partir de la puissance reçue « $P_{reçue}$ » et de la puissance d'émission du signal prédéfini « $P_0$ », en utilisant une méthode connue, typiquement l'équation des télécommunications (ou *« Friis transmission equation »* en anglais).

Une fois la distance « D » entre l'émetteur 200 et le récepteur 300 déterminée, le récepteur 300 détermine, à partir de la valeur du deuxième paramètre correspondant à la puissance simulée d'émission de la source du rayonnement ionisant, un niveau d'exposition simulé au rayonnement ionisant. Ainsi, le niveau d'exposition est proportionnel à « $R_{simulée}$ » divisée par le carré de la distance « D ».

Selon un mode de réalisation particulier de l'invention, « $R_{simulée}$» est exprimée en termes de « *dangerosité à un mètre* ». Dans ce cas, le niveau d'exposition « $N_{expo}$ » est déterminé par la formule :

$$N_{expo} = R_{simulée} / D^2, \text{ avec D exprimée en mètre.}$$

Dit autrement, « $N_{expo}$ » est proportionnel à : « $R_{simulée}$ » multiplié par « $P_{reçue}$ » et divisé par « $P_0$ ». Le facteur de proportionnalité peut être fixé lors d'une phase d'étalonnage du récepteur 300, par exemple lors de sa fabrication.

Le récepteur 300 peut afficher le niveau d'exposition déterminé sur le dispositif de présentation d'information DISP 305. Le récepteur 300 peut aussi intégrer les valeurs des niveaux d'exposition déterminées au fil du temps pour déterminer une dose simulée de radiation (rayonnement ionisant) reçue. Dans ce cas, le récepteur 300 peut comprendre un procédé de remise à zéro afin de réinitialiser l'intégration des valeurs d'exposition.

Selon un mode de réalisation de l'invention, le récepteur 300 est adapté pour émettre au moins un message comprenant le niveau d'exposition déterminé à destination d'un dispositif électronique de contrôle. Ce message peut être émis périodiquement vers le dispositif de contrôle, ou juste lors d'un changement de la valeur de niveau d'exposition déterminée par le récepteur 300.

La **Fig.6** illustre schématiquement un deuxième procédé alternatif de fonctionnement d'un récepteur 300 permettant de simuler la mesure d'un rayonnement ionisant pouvant être utilisé dans le système tel qu'illustré dans la Fig. 1.

Selon le mode de réalisation illustré ci-après correspondant à la Fig. 6, l'émetteur 100, 200 comprend deux paires d'antennes. La longueur d'onde considérée ici est la longueur d'onde correspondant à la technologie utilisée par l'émetteur 200 pour émettre le signal prédéfini. Ainsi, dans le cas d'un émetteur 200 comprenant une interface de communication RADIO 210 à la norme « *Bluetooth* », la distance séparant deux paires d'antennes est d'environ six virgule vingt-cinq centimètres (6.25 cm). Les antennes de chaque paire sont disposées perpendiculairement l'une par rapport à l'autre, de manière à former une équerre. Les paires d'antennes sont placées parallèlement l'une par rapport à l'autre, à une distance d'une demi-longueur d'onde.

Le récepteur 300 est en mesure de distinguer chaque signal prédéfini émis par chaque antenne. Pour cela, chaque antenne peut émettre un signal prédéfini distinct ou sur un canal d'émission différent. Alternativement, le récepteur 300 distingue chaque signal prédéfini émis par chaque antenne au moyen d'un identifiant unique associé à chaque antenne, tel une adresse réseau de type MAC.

L'étape 600 correspond notamment à une initialisation du récepteur 300. Lors de cette étape, toutes ou certaines mesures précédemment réalisées par le récepteur 300 peuvent être réinitialisées. Un compteur temporel est déclenché ou réinitialisé lors de l'étape 600.

Dans une étape 610, le récepteur 300 reçoit un signal prédéfini émis par l'une des quatre antennes A, B, C ou D de l'émetteur 200. Le récepteur 300 identifie l'antenne à l'origine de l'émission, par exemple à partir de son adresse MAC. Le récepteur mesure la puissance de réception de ce signal prédéfini pour l'antenne identifiée, cette puissance est notée :

$$P(x),$$

avec « x » = A, B, C ou D, selon l'antenne identifiée.

Dans une étape 620, le récepteur 300 calcule une puissance dite puissance de référence pour l'antenne identifiée lors de l'étape précédente. La puissance de référence est notée :

$$P_{ref}(x),$$

avec « x » = A, B, C ou D, selon l'antenne identifiée.

Le récepteur 300 garde en mémoire une valeur de « $P_{ref}(x)$ » pour x = A, B, C et D.

La valeur « $P_{ref}(x)$ » est initialisée à zéro lors de la première itération de l'étape 600, typiquement après la mise sous tension du récepteur 300. La valeur de « $P_{ref}(x)$ » n'est pas remise à zéro lors des itérations suivantes de l'étape 600, suite à l'exécution d'une étape 680 de calcul d'un niveau d'exposition.

Si, lors d'une étape 620, « $P_{ref}(x)$ » est égale à zéro, alors « $P_{ref}(x)$ » est mis à jour en utilisant la valeur « P(x) ». Dans le cas contraire, la valeur de « $P_{ref}(x)$ » est mise à jour en utilisant la fonction de type « filtre passe-bas » suivante :

$$Alpha . P(x) + (1 - Alpha) . P_{ref}(x),$$

« Alpha » est un paramètre de valeur prédéterminée, de valeur comprise entre zéro et un.

Une valeur typique du paramètre « Alpha » est 0,0625.

Dit autrement, « $P_{ref}(x)$ » est mise à jour en remplaçant sa valeur par la valeur correspondant au précédent calcul, en fonction de la valeur de « P(x) » et de la valeur en mémoire de « $P_{ref}(x)$ ». Chaque fois que le récepteur 300 met à jour une valeur « $P_{ref}(x)$ », un paramètre dit drapeau *(flag* en anglais) est positionné en association avec « $P_{ref}(x)$ ». La présence d'un tel paramètre associé à « $P_{ref}(x)$ » indique donc que la valeur de « $P_{ref}(x)$ » a été mise à jour lors d'une étape 620.

Dans une étape 630, le récepteur 300 peut vérifier les critères suivants :

- une durée écoulée depuis le déclenchement du compteur temporel lors de l'étape 600, et/ou,
- le calcul d'un nombre prédéterminé d'une puissance reçue lors d'une étape 650. Dit autrement, le récepteur 300 peut vérifier que l'étape 650 a été effectuée un nombre prédéterminé de fois.

Selon un mode de réalisation de l'invention, si le récepteur 300 détermine qu'une durée supérieure à une durée prédéterminée s'est écoulée depuis le déclenchement du compteur temporel lors de l'étape 600 ou que l'étape 650 a été effectuée au moins un nombre prédéterminé de fois, alors le récepteur 300 effectue ensuite l'étape 660. Selon le mode de réalisation de l'invention, l'une, l'autre, l'une ou l'autre ou les deux conditions doivent être vérifiées pour effectuer ensuite l'étape 660. Dans le cas contraire, le récepteur 300 effectue l'étape 640.

Dans une étape 640, le récepteur 300 vérifie la présence de paramètre dit drapeau en association avec « $P_{ref}(x)$ », avec x égal à A, B, C ou D. Dans le cas où l'une des puissances de référence Pref(x) ne possède pas de paramètre drapeau associé, alors le récepteur 300 repasse à l'étape 610, c'est-à-dire qu'il se met à l'écoute pour recevoir un nouveau signal prédéfini en provenance d'une des quatre antennes. Si au contraire un paramètre drapeau est associé à chaque puissance de référence « $P_{ref}(x)$ », alors le récepteur 300 passe à l'étape 650.

Dans l'étape 650, le récepteur 300 détermine une puissance reçue en provenance de l'émetteur 200. Cette puissance reçue correspond à la moyenne des puissances de référence « $P_{ref}(x)$ » pour les quatre antennes A, B, C et D. Chaque valeur de la puissance reçue ainsi calculée est gardée en mémoire par le récepteur 300, ainsi que le nombre de valeurs conservées. Une fois une puissance reçue calculée, le récepteur 300 supprime les paramètres dits drapeaux associés aux puissances de référence « $P_{ref}(x)$ ». Le récepteur 300 repasse ensuite à l'étape 610 dans l'attente de recevoir un nouveau signal prédéfini.

Dans l'étape 660, le récepteur 300 calcule la moyenne des puissances reçues calculées lors de ou des étapes 650 et gardées en mémoire par le récepteur 300. Une fois cette puissance reçue moyenne calculée, le récepteur 300 supprime les différentes puissances reçues calculées lors de l'étape 650 de sa mémoire. La puissance reçue moyenne calculée est à comparer à la valeur « $P_{reçue}$ » de la Fig. 5.

Dans une étape 670, le récepteur 300 détermine la distance « D » entre lui-même et l'émetteur 200. Cette distance est calculée en fonction de la puissance reçue moyenne calculée lors de l'étape 660 selon le même principe que décrit lors de la description de l'étape 515 de la Fig. 5 pour le calcul de la distance « D ». Il est à noter que, dans une étape non représentée dans la Fig. 6, le récepteur 300 reçoit les messages émis par l'émetteur 200 comprenant les paramètres «$P_0$» de puissance d'émission du signal prédéfini de l'émetteur 200 et la puissance simulée d'émission de la source de rayonnement ionisant.

Dans une étape 680, le récepteur 300 détermine une valeur d'un niveau d'exposition à la source simulée de rayonnement ionisant, de façon similaire à ce qui est décrit dans l'étape 515 de la Fig. 5.

Le récepteur recommence ensuite le procédé à l'étape 600.

La présente invention décrite ci-avant est adaptée à la simulation d'une source de rayonnement ionisant. La présente invention est aussi adaptée à la simulation de toute autre source émettant un rayonnement, produit, gaz, ou fluide, potentiellement dangereux ou non. Le récepteur 300 peut déterminer un niveau d'exposition dépendant de la distance selon une loi de variation inversement proportionnelle au carré de la distance (« $1 / D^2$ »), comme décrit ci-avant. Le récepteur 300 peut aussi utiliser l'autre loi de décroissance (ou de croissance), comme par exemple un niveau d'exposition inversement proportionnel à la seule distance (« $1 / D$ ») ou toute autre loi. Le récepteur peut aussi utiliser une loi par palier, considérant par exemple que le niveau d'exposition est égal à une première valeur prédéterminée lorsque la distance déterminée à la source est inférieure à un premier seuil et égale à une deuxième valeur prédéterminée lorsque la distance est supérieure au premier seuil. Plusieurs seuils, définissant autant de paliers sont possibles. Selon un mode de réalisation de l'invention, le dispositif électronique de contrôle 120 peut envoyer au récepteur 300 une commande afin que le récepteur 300 utilise l'une ou l'autre des lois de calcul du niveau d'exposition possible. Ce message peut comprendre une référence à une loi de calcul préenregistrée sur le récepteur 300 ou bien comprendre les paramètres permettant de mettre en œuvre la loi permettant un calcul d'un niveau d'exposition. De façon plus générale, le dispositif électronique de contrôle 120 peut envoyer au récepteur 300 un message comprenant une commande pour modifier la loi permettant le calcul d'un niveau d'exposition à tout moment. Le dispositif électronique de contrôle 120 peut aussi envoyer un message au récepteur 300 afin qu'une valeur de « $P_0$ », puissance d'émission du signal prédéfini émis par un émetteur 200, ou qu'une valeur «$R_{simulée}$», de puissance simulée d'émission d'une source différente d'une valeur reçue dans un message émis par ledit émetteur 200 soit utilisée par le récepteur 300. Dit autrement, le dispositif électronique de contrôle 120 peut envoyer des messages afin de remplacer pour un récepteur 300 les informations ou paramètres émis par un émetteur 200. Selon un mode de réalisation de l'invention, les paramètres « $P_0$ » et « $R_{simulée}$ » sont transmis au récepteur 300 par des messages envoyés depuis le dispositif électronique de contrôle 120 et non émis depuis chaque émetteur 200.

## Revendications

**1.** Emetteur d'ondes électromagnétiques (100, 200) permettant de simuler une source d'émission d'un rayonnement ionisant, l'émetteur d'ondes électromagnétiques étant adapté pour :

- émettre (415) au moins un signal prédéfini avec une puissance d'émission, et étant **caractérisé en ce qu'**il est adapté pour:

- émettre (420) un premier message comprenant une valeur d'un premier paramètre correspondant à la puissance d'émission du signal prédéfini émis, et,
- émettre (420) un deuxième message comprenant une valeur d'un deuxième paramètre correspondant à une puissance simulée d'émission de la source du rayonnement ionisant.

2. Emetteur d'ondes électromagnétiques (100, 200) selon la revendication 1, l'émetteur d'ondes électromagnétiques comprenant un dispositif de saisie, l'émetteur d'ondes électromagnétiques étant adapté pour déterminer la valeur du deuxième paramètre caractérisant la puissance simulée d'émission du rayonnement ionisant.

3. Emetteur d'ondes électromagnétiques (100, 200) selon la revendication 1, l'émetteur d'ondes électromagnétiques étant adapté pour recevoir (405, 410) un troisième message comprenant une indication afin de déterminer la valeur du deuxième paramètre caractérisant la puissance simulée d'émission du rayonnement ionisant.

4. Emetteur d'ondes électromagnétiques (100, 200) selon l'une des revendications précédentes, l'émetteur d'ondes électromagnétiques comprenant un nombre pair d'antennes disposées par paires, les paires d'antennes étant séparées d'une distance égale à une demi-longueur d'onde d'une porteuse utilisée pour l'émission du signal prédéfini.

5. Emetteur d'ondes électromagnétiques (100, 200) selon l'une des revendications précédentes, l'émetteur d'ondes électromagnétiques étant adapté pour émettre le signal prédéfini sur une pluralité de canaux de transmission.

6. Emetteur d'ondes électromagnétiques (100, 200) selon l'une des revendications précédentes, le premier message et le deuxième message étant un même message.

7. Emetteur d'ondes électromagnétiques (100, 200) selon l'une des revendications précédentes, le signal prédéfini étant émis périodiquement.

8. Récepteur d'ondes électromagnétiques (110, 111, 300) permettant de recevoir un signal correspondant à une simulation d'émission d'un rayonnement ionisant, le récepteur d'ondes électromagnétiques étant adapté pour :

   - recevoir (505) un signal prédéfini émis par un émetteur d'ondes électromagnétiques (100, 200) permettant de simuler une source d'émission d'un rayonnement ionisant,
   - déterminer (505) une puissance de réception dudit signal prédéfini, et étant **caractérisé en ce qu'**il est adapté pour:
   - recevoir (510) un premier message comprenant une valeur d'un premier paramètre correspondant à la puissance d'émission du signal prédéfini émis,
   - recevoir (510) un deuxième message comprenant une valeur d'un deuxième paramètre correspondant à une puissance simulée d'émission de la source du rayonnement ionisant, et,
   - déterminer (515) un niveau d'exposition simulé au rayonnement ionisant en fonction de la puissance de réception du signal prédéfini, de la valeur du premier paramètre et de la valeur du deuxième paramètre.

9. Récepteur d'ondes électromagnétiques (110, 111, 300) selon la revendication précédente, l'émetteur d'ondes électromagnétiques (100, 200) comprenant une pluralité d'antennes d'émission, chaque antenne émettant un signal prédéfini, le récepteur d'ondes électromagnétiques étant adapté pour, afin de déterminer (505, 660) une puissance de réception permettant de déterminer une distance entre le récepteur (110, 111, 300) et l'émetteur (100, 200) :

   - déterminer au moins une puissance de réception du signal prédéfini pour chaque antenne,
   - déterminer itérativement une puissance, dite puissance de référence, pour chaque antenne, une nouvelle valeur de la puissance de référence étant déterminée en utilisant la puissance de réception et la puissance de référence précédemment déterminées,
   - déterminer une puissance de réception pour l'émetteur en utilisant les valeurs des puissances de références de la pluralité d'antennes.

10. Récepteur d'ondes électromagnétiques (110, 111, 300) selon l'une des revendications 8 ou 9, le récepteur d'ondes électromagnétiques étant adapté en outre pour émettre au moins un message comprenant le niveau d'exposition simulé au rayonnement ionisant à destination d'un dispositif électronique de contrôle.

11. Système comprenant au moins un émetteur d'ondes électromagnétiques (100, 200) permettant de simuler une émission d'un rayonnement ionisant, chaque émetteur d'ondes électromagnétiques étant adapté pour :

- émettre (415) périodiquement un signal prédéfini, et étant **caractérisé en ce qu'**il est adapté pour:
- émettre (420) un message comprenant une information sur la puissance d'émission du signal prédéfini émis, et,
- émettre (420) un message comprenant une information sur une puissance simulée d'émission du rayonnement ionisant,

et au moins un récepteur d'ondes électromagnétiques (110, 111, 300) permettant de simuler la réception du rayonnement ionisant, chaque récepteur d'ondes électromagnétiques étant adapté pour :

- recevoir (505) le signal prédéfini émis par l'émetteur d'ondes électromagnétiques permettant de simuler une source d'émission du rayonnement ionisant,
- déterminer (505) une puissance de réception dudit signal prédéfini, et étant **caractérisé en ce qu'**il est adapté pour:
- recevoir (510) le message comprenant une information sur la puissance d'émission du signal prédéfini reçu,
- recevoir (510) le message comprenant une information sur la puissance simulée d'émission du rayonnement ionisant, et,
- déterminer (515) un niveau d'exposition simulé au rayonnement ionisant de la source simulée d'émission du rayonnement ionisant en fonction de la puissance de réception du signal prédéfini, de l'information sur la puissance d'émission du signal prédéfini reçu et de l'information sur la puissance simulée d'émission du rayonnement ionisant.

12. Un système selon la revendication 11, le système comprenant en outre un dispositif électronique de contrôle (120), le récepteur d'ondes électromagnétiques étant adapté pour émettre au moins un message à destination du dispositif électronique de contrôle, ledit message comprenant une information sur le niveau d'exposition simulé au rayonnement ionisant déterminé par le récepteur d'ondes électromagnétiques.

## Patentansprüche

1. Emitter elektromagnetischer Wellen (100, 200), der es ermöglicht, eine Emissionsquelle einer ionisierenden Strahlung zu simulieren, wobei der Emitter elektromagnetischer Wellen geeignet ist:

- mindestens ein vordefiniertes Signal mit einer Sendeleistung zu senden (415), und **dadurch gekennzeichnet ist, dass** er geeignet ist:

- eine erste Nachricht zu senden (420), die einen Wert eines ersten Parameters entsprechend der Sendeleistung des gesendeten vordefinierten Signals enthält, und
- eine zweite Nachricht zu senden (420), die einen Wert eines zweiten Parameters entsprechend einer simulierten Emissionsleistung der Quelle der ionisierenden Strahlung enthält.

2. Emitter elektromagnetischer Wellen (100, 200) nach Anspruch 1, wobei der Emitter elektromagnetischer Wellen eine Erfassungsvorrichtung enthält, wobei der Emitter elektromagnetischer Wellen geeignet ist, den Wert des zweiten Parameters zu bestimmen, der die simulierte Emissionsleistung der ionisierenden Strahlung kennzeichnet.

3. Emitter elektromagnetischer Wellen (100, 200) nach Anspruch 1, wobei der Emitter elektromagnetischer Wellen geeignet ist, eine dritte Nachricht zu empfangen (405, 410), die eine Angabe enthält, um den Wert des zweiten Parameters zu bestimmen, der die simulierte Emissionsleistung der ionisierenden Strahlung kennzeichnet.

4. Emitter elektromagnetischer Wellen (100, 200) nach einem der vorhergehenden Ansprüche, wobei der Emitter elektromagnetischer Wellen eine gerade Anzahl von paarweise angeordneten Antennen enthält, wobei die Antennenpaare um einen Abstand gleich einer halben Wellenlänge einer Trägerwelle getrennt sind, die zum Senden des vordefinierten Signals verwendet wird.

5. Emitter elektromagnetischer Wellen (100, 200) nach einem der vorhergehenden Ansprüche, wobei der Emitter elektromagnetischer Wellen geeignet ist, das vordefinierte Signal auf einer Vielzahl von Übertragungskanälen zu senden.

6. Emitter elektromagnetischer Wellen (100, 200) nach einem der vorhergehenden Ansprüche, wobei die erste Nachricht und die zweite Nachricht eine gleiche Nachricht sind.

7. Emitter elektromagnetischer Wellen (100, 200) nach einem der vorhergehenden Ansprüche, wobei das vordefinierte Signal periodisch gesendet wird.

8. Empfänger elektromagnetischer Wellen (110, 111, 300), der es ermöglicht, ein Signal zu empfangen, das einer Emissionssimulation einer ionisierenden Strahlung entspricht, wobei der Empfänger elektromagnetischer Wellen geeignet ist:

   - ein von einem Emitter elektromagnetischer Wellen (100, 200) gesendetes vordefiniertes Signal zu empfangen (505), das es ermöglicht, eine Emissionsquelle einer ionisierenden Strahlung zu simulieren,
   - eine Empfangsleistung des vordefinierten Signals zu bestimmen (505),

   und **dadurch gekennzeichnet ist, dass** er geeignet ist:

   - eine erste Nachricht zu empfangen (510), die einen Wert eines ersten Parameters entsprechend der Sendeleistung des gesendeten vordefinierten Signals enthält,
   - eine zweite Nachricht zu empfangen (510), die einen Wert eines zweiten Parameters entsprechend einer simulierten Emissionsleistung der Quelle der ionisierenden Strahlung enthält, und
   - einen simulierten Expositionspegel gegenüber der ionisierenden Strahlung abhängig von der Empfangsleistung des vordefinierten Signals, dem Wert des ersten Parameters und dem Wert des zweiten Parameters zu bestimmen (515).

9. Empfänger elektromagnetischer Wellen (110, 111, 300) nach dem vorhergehenden Anspruch, wobei der Emitter elektromagnetischer Wellen (100, 200) eine Vielzahl von Sendeantennen enthält, wobei jede Antenne ein vordefiniertes Signal sendet, wobei der Empfänger elektromagnetischer Wellen geeignet ist, zur Bestimmung (505, 660) einer Empfangsleistung, die es ermöglicht, einen Abstand zwischen dem Empfänger (110, 111, 300) und dem Emitter (100, 200) zu bestimmen:

   - mindestens eine Empfangsleistung des vordefinierten Signals für jede Antenne zu bestimmen,
   - iterativ eine Bezugsleistung genannte Leistung für jede Antenne zu bestimmen, wobei ein neuer Wert der Bezugsleistung unter Verwendung der vorher bestimmten Empfangsleistung und Bezugsleistung bestimmt wird,
   - eine Empfangsleistung für den Emitter unter Verwendung der Werte der Bezugsleistungen der Vielzahl von Antennen zu bestimmen.

10. Empfänger elektromagnetischer Wellen (110, 111, 300) nach einem der Ansprüche 8 oder 9, wobei der Empfänger elektromagnetischer Wellen außerdem geeignet ist, mindestens eine Nachricht, die den simulierten Expositionspegel gegenüber der ionisierenden Strahlung enthält, an eine elektronische Kontrollvorrichtung zu senden.

11. System, das mindestens einen Emitter elektromagnetischer Wellen (100, 200), der es ermöglicht, ein Emittieren einer ionisierenden Strahlung zu simulieren, wobei jeder Emitter elektromagnetischer Wellen geeignet ist:

   - periodisch ein vordefiniertes Signal zu senden (415), und **dadurch gekennzeichnet ist, dass** er geeignet ist:
   - eine Nachricht zu senden (420), die eine Information über die Sendeleistung des gesendeten vordefinierten Signals enthält, und
   - eine Nachricht zu senden (420), die eine Information über eine simulierte Emissionsleistung der ionisierenden Strahlung enthält,

   und mindestens einen Empfänger elektromagnetischer Wellen (110, 111, 300) enthält, der es ermöglicht, den Empfang der ionisierenden Strahlung zu simulieren, wobei jeder Empfänger elektromagnetischer Wellen geeignet ist:

   - das vom Emitter elektromagnetischer Wellen gesendete vordefinierte Signal zu empfangen (505), das es ermöglicht, eine Emissionsquelle der ionisierenden Strahlung zu simulieren,
   - eine Empfangsleistung des vordefinierten Signals zu bestimmen (505),

   und **dadurch gekennzeichnet ist, dass** er geeignet ist:

   - die Nachricht zu empfangen (510), die eine Information über die Sendeleistung des empfangenen vordefinierten Signals enthält,
   - die Nachricht zu empfangen (510), die eine Information über die simulierte Emissionsleistung der ionisierenden Strahlung enthält, und

- einen simulierten Expositionspegel gegenüber der ionisierenden Strahlung der simulierten Emissionsquelle der ionisierenden Strahlung abhängig von der Empfangsleistung des vordefinierten Signals, der Information über die Sendeleistung des empfangenen vordefinierten Signals und der Information über die simulierte Emissionsleistung der ionisierenden Strahlung zu bestimmen (515).

12. System nach Anspruch 11, wobei das System außerdem eine elektronische Kontrollvorrichtung (120) enthält, wobei der Empfänger elektromagnetischer Wellen geeignet ist, mindestens eine Nachricht an die elektronische Kontrollvorrichtung zu senden, wobei die Nachricht eine Information über den vom Empfänger elektromagnetischer Wellen bestimmten simulierten Expositionspegel gegenüber der ionisierenden Strahlung enthält.

**Claims**

1. Electromagnetic wave transmitter (100, 200) allowing a source of emission of an ionizing radiation to be simulated, the electromagnetic wave transmitter being designed to:

   - transmit (415) at least one predefined signal with a transmission power, and being **characterized in that** it is designed to:
   - transmit (420) a first message comprising a value of a first parameter corresponding to the transmission power of the transmitted predefined signal, and
   - transmit (420) a second message comprising a value of a second parameter corresponding to a simulated emission power of the source of the ionizing radiation.

2. Electromagnetic wave transmitter (100, 200) according to Claim 1, the electromagnetic wave transmitter comprising an input device, the electromagnetic wave transmitter being designed to determine the value of the second parameter characterizing the simulated power of emission of the ionizing radiation.

3. Electromagnetic wave transmitter (100, 200) according to Claim 1, the electromagnetic wave transmitter being designed to receive (405, 410) a third message comprising an indication in order to determine the value of the second parameter characterizing the simulated power of emission of the ionizing radiation.

4. Electromagnetic wave transmitter (100, 200) according to one of the preceding claims, the electromagnetic wave transmitter comprising an even number of antennas arranged in pairs, the pairs of antennas being separated by a distance equal to a half-wavelength of a carrier used to transmit the predefined signal.

5. Electromagnetic wave transmitter (100, 200) according to one of the preceding claims, the electromagnetic wave transmitter being designed to transmit the predefined signal over a plurality of transmission channels.

6. Electromagnetic wave transmitter (100, 200) according to one of the preceding claims, the first message and the second message being the same message.

7. Electromagnetic wave transmitter (100, 200) according to one of the preceding claims, the predefined signal being transmitted periodically.

8. Electromagnetic wave receiver (110, 111, 300) allowing a signal corresponding to a simulation of emission of an ionizing radiation to be received, the electromagnetic wave receiver being designed to:

   - receive (505) a predefined signal transmitted by an electromagnetic wave transmitter (100, 200) allowing a source of emission of an ionizing radiation to be simulated,
   - determine (505) a power of reception of said predefined signal, and being **characterized in that** it is designed to:

     - receive (510) a first message comprising a value of a first parameter corresponding to the transmission power of the transmitted predefined signal,
     - receive (510) a second message comprising a value of a second parameter corresponding to a simulated emission power of the source of the ionizing radiation, and
     - determine (515) a simulated level of exposure to the ionizing radiation according to the power of reception of the predefined signal, the value of the first parameter and the value of the second parameter.

9. Electromagnetic wave receiver (110, 111, 300) according to the preceding claim, the electromagnetic wave transmitter (100, 200) comprising a plurality of transmitting antennas, each antenna transmitting a predefined signal, the electromagnetic wave receiver being designed to, in order to determine (505, 660) a reception power allowing a distance between the receiver (110, 111, 300) and the transmitter (100, 200) to be determined:

- determine at least one power of reception of the predefined signal for each antenna,
- iteratively determine a power, called the reference power, for each antenna, a new value of the reference power being determined using the reception power and the reference power determined previously,
- determine a reception power for the transmitter using the values of the reference powers of the plurality of antennas.

10. Electromagnetic wave receiver (110, 111, 300) according to one of Claims 8 and 9, the electromagnetic wave receiver being further designed to transmit at least one message comprising the simulated level of exposure to the ionizing radiation to an electronic monitoring device.

11. System comprising at least one electromagnetic wave transmitter (100, 200) allowing an emission of an ionizing radiation to be simulated, each electromagnetic wave transmitter being designed to:

- periodically transmit (415) a predefined signal, and being **characterized in that** it is designed to:
- transmit (420) a message comprising an item of information on the transmission power of the transmitted predefined signal, and
- transmit (420) a message comprising an item of information on a simulated power of emission of the ionizing radiation,
- and at least one electromagnetic wave receiver (110, 111, 300) allowing the reception of the ionizing radiation to be simulated, each electromagnetic wave receiver being designed to:

- receive (505) the predefined signal transmitted by the electromagnetic wave transmitter allowing a source of emission of the ionizing radiation to be simulated,
- determine (505) a power of reception of said predefined signal, and being **characterized in that** it is designed to:
- receive (510) the message comprising an item of information on the transmission power of the received predefined signal,
- receive (510) the message comprising an item of information on the simulated power of transmission of the ionizing radiation, and
- determine (515) a simulated level of exposure to the ionizing radiation from the simulated source of emission of the ionizing radiation according to the power of reception of the predefined signal, the information on the transmission power of the received predefined signal and the information on the simulated power of emission of the ionizing radiation.

12. System according to Claim 11, the system further comprising an electronic monitoring device (120), the electromagnetic wave receiver being designed to transmit at least one message to the electronic monitoring device, said message comprising an item of information on the simulated level of exposure to the ionizing radiation determined by the electromagnetic wave receiver.

**Fig. 1**

**Fig. 2**

**Fig. 3**

400

INIT

410

405

MAJ Data

Conf
?

oui                     non

415

Emission
Balise

420

Data

**Fig. 4**

500

INIT

505

$P_{reçu}$

510

Data

515

Dose

**Fig. 5**

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4917611 A